# EUROPÄISCHE PATENTSCHRIFT

(11) **EP 2 675 587 B1**
(45) Veröffentlichungstag und Bekanntmachung des Hinweises auf die Patenterteilung: **01.03.2017**
(21) Anmeldenummer: 11808655.2
(22) Anmeldetag: 28.12.2011
(51) Int. Cl.: B23K 26/26, H01J 9/28, H01J 61/36

(54) **VERFAHREN ZUM VERBINDEN ZWEIER FÜGEPARTNER MITTELS LASERSTRAHLUNG UND MECHANISCHEN DRUCKES, VERWENDUNG DES VERFAHRENS**
METHOD OF CONNECTING TWO JOINING PARTNERS BY MEANS OF LASER RADIATION AND MECHANICAL PRESSURE, USE OF THE METHOD
PROCÉDÉ D'ASSEMBLAGE DE DEUX PARTIES AU MOYEN D'UN RAYONNEMENT LASER ET D'UNE PRESSION MÉCANIQUE, UTILISATION DUDIT PROCÉDÉ

(30) Priorität: 15.02.2011 DE 102011004104
(43) Veröffentlichungstag der Anmeldung: 25.12.2013
(73) Patentinhaber: Robert Bosch GmbH, 70442 Stuttgart (DE)
(72) Erfinder: ENGLER, Sebastian, 70771 Leinfelden-Echterdingen (DE); RAMSAYER, Reiner, 71701 Schwieberdingen (DE)
(86) Internationale Anmeldenummer: PCT/EP2011/074154
(87) Internationale Veröffentlichungsnummer: WO 2012/110154

(56) Entgegenhaltungen:
- JP-A- 54 051 944
- JP-A- 60 003 991
- JP-A- 2009 004 238
- US-A- 4 224 499
- US-A- 5 064 992
- US-A1- 2003 030 373

## Beschreibung

### Stand der Technik

Die Erfindung betrifft ein Verfahren zum Verbinden zweier Fügepartner mittels Laserstrahlung nach dem Oberbegriff des Anspruchs 1.

Ein Verfahren gemäß dem Oberbegriff des Anspruchs 1 ist aus der DE 103 93 368 T5 oder aus der US4,224,499 bekannt. Bei dem bekannten Verfahren werden zwei aus unterschiedlichen Materialien bestehende Metallbleche miteinander verbunden, indem das eine Metallblech im Bereich der Fügezone mittels einer Laserstrahleinrichtung aufgeheizt wird, und die beiden Metallbleche anschließend zwischen zwei Presswalzen hindurchgeführt werden, sodass in der Fügezone die beiden Metallbleche mit hohem Druck gegeneinander gedrückt und somit verbunden werden.

Das bekannte Verfahren setzt voraus, dass das eine Metallblech im gesamten Bereich der Fügezone erwärmt bzw. aufgeschmolzen wird. Dadurch ist ein relativ hoher Energieeintrag in das Metallblech erforderlich. Darüber hinaus besteht, je nach Geometrie der zu verbindenden Bauteile, die Gefahr, dass aufgrund des hohen Energieeintrags Bereiche eines Fügepartners so stark erwärmt und ggf. in negativer Weise beschädigt bzw. verformt werden, obwohl diese Bereiche an sich zum Verbinden der beiden Fügepartner nicht erwärmt werden müssten.

Aus dem US 5,064,992 ist ein Verfahren zum Verbinden zweier Fügepartner bekannt, bei dem zwischen den Fügepartnern bereits während des Aufschmelzens des Materials eines Fügepartners ein (mechanischer) Druck ausgeübt wird. Darüber hinaus findet ein Aufschmelzen des Materials des ersten Fügepartners über die gesamte Stirnfläche des ersten Fügepartners statt.

Aus der JP 60 003991 A ist darüber hinaus ein Verfahren zum Verbinden zweier Fügepartner nach dem Oberbegriff des Anspruchs 1 bekannt, bei dem ein zylindrisches Teil als erster Fügepartner mit einem kugelförmigen Teil als zweitem Fügepartner verbunden wird. Mittels einer Laserstrahleinrichtung wird auf der dem zweiten Fügepartner zugewandten Seite des ersten Fügepartners das Material des ersten Fügepartners aufgeschmolzen. Dabei ist der Laserstrahl auf eine Umfangsfläche des ersten Fügepartners ausgerichtet, d.h., dass dieser nicht unmittelbar auf die Stirnfläche des ersten Fügepartners gerichtet ist. Nach dem Aufschmelzen des Materials des ersten Fügepartners wird mittels einer pneumatischen Einrichtung eine Axialkraft auf den ersten Fügepartner ausgeübt, der dadurch den ersten Fügepartner mit dem über die gesamte Stirnfläche des ersten Fügepartners aufgeschmolzenem Material gegen den zweiten Fügepartner drückt.

Ein typischer Anwendungsfall zum Verbinden zweier aus unterschiedlichen Materialien bestehender Fügepartner ist in der DE 297 17 417 U1 der Anmelderin dargestellt. Hierbei wird ein Polrad eines Drehstromgenerators, der aus einem Wellenstumpf und einem damit verbundenen Polkern besteht, durch Reibschweißen miteinander verbunden. Beim Reibschweißen werden die beiden Fügepartner relativ zueinander bewegt, wobei sie gleichzeitig gegeneinander gepresst werden, bis zumindest einer der Fügepartner im Verbindungsbereich aufgeschmolzen ist.

Weitere derartige Anwendungsfälle zum Verbinden von zwei aus unterschiedlichen Materialien bestehenden Fügepartnern sind aus der DE 103 59 564 B4 der Anmelderin bekannt. Dabei wird der Fügepartner, der aus dem Material mit der niedrigeren Schmelztemperatur besteht, partiell erwärmt bzw. verflüssigt, sodass der aufgeschmolzene Bereich nach dessen Erstarrung mit dem eine höhere Schmelztemperatur aufweisenden Fügepartner durch eine entsprechende geometrische Gestaltung des letztgenannten Fügepartners eine formschlüssige Verbindung ausbildet. Eine derartige Anwendung kann beispielsweise in der Ausbildung einer elektrischen Verbindung bestehen.

Aus der US 4,224,499 ist darüber hinaus ein Laserschweißverfahren bekannt, bei dem ein aus Kupfer bestehender Fügepartner und ein aus Aluminium bestehender Fügepartner stumpf gegeneinander gepresst werden, wobei der Verbindungs- bzw. Fügebereich mittels einer Laserstrahleinrichtung erwärmt bzw. aufgeschmolzen wird. Ziel eines derartigen Laserstrahlverschweißens ist insbesondere die Vermeidung von intermetallischen Phasen, die sich nachteilig auf die Verbindung bzw. deren Festigkeit auswirken.

### Offenbarung der Erfindung

Ausgehend von dem dargestellten Stand der Technik liegt der Erfindung die Aufgabe zugrunde, ein Verfahren zum Verbinden zweier Fügepartner mittels Laserstrahlung nach dem Oberbegriff des Anspruchs 1 derart weiterzubilden, dass der in Wirkverbindung mit der Laserstrahlung angeordnete Fügepartner thermisch möglichst wenig belastet wird, damit Beschädigungen oder Verformungen an dem entsprechenden Fügepartner vermieden werden können.

Ein Verfahren gemäß der Erfindung ist in Anspruch 1 definiert.

Mit anderen Worten gesagt bedeutet dies, dass die Wärme lediglich partiell in den ersten Fügepartner eingebracht wird und insbesondere derartige Bereiche von der Erwärmung bzw. von dem Aufschmelzen ausgeschlossen werden, bei denen eine funktionale oder geometrische Beeinträchtigung durch eine Wärmebelastung ausgeschlossen bzw. verhindert werden soll. Darüber hinaus hat das erfindungsgemäße Verfahren den besonderen Vorteil, dass beim Gegeneinanderpressen der beiden Fügepartner dadurch, dass der erste Fügepartner im Verbindungsbereich lediglich teilweise aufgeschmolzen wird, der nicht aufgeschmolzene Bereich als Anschlag für den zweiten Fügepartner dient, sodass sich die beiden Fügepartner beim Zusammenpressen besonders einfach ausrichten bzw. positionieren lassen.

Vorteilhafte Weiterbildungen des erfindungsgemäßen Verfahrens zum Verbinden zweier Fügepartner mittels Laserstrahlung sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Besonders vorteilhaft ist die Verwendung des Verfahrens bei Fügepartnern, bei denen die beiden Fügepartner aus unterschiedlichen Materialien mit unterschiedlichem Schmelzpunkt bestehen, wobei derjenige Fügepartner aufgeschmolzen wird, dessen Material den niedrigeren Schmelzpunkt aufweist. Beispielhaft, jedoch nicht einschränkend, seien hierbei Verbindungen zwischen Aluminium und Kupfer genannt, bei denen das Aluminium den niedrigeren Schmelzpunkt aufweist und somit aufgeschmolzen wird. Derartige Materialien werden beim Stand der Technik üblicherweise durch Reibschweißen miteinander verbunden und können erfindungsgemäß nunmehr anstelle dessen durch eine Laserschweißverbindung miteinander verbunden werden.

Ganz besonders bevorzugt ist es, wenn der erste Fügepartner im Verbindungsbereich eine strukturierte Oberfläche aufweist, wobei die strukturierte Oberfläche wenigstens einen vom Grund des Fügepartners heraus- bzw. hervorragenden Bereich aufweist, wobei der wenigstens eine Bereich aufgeschmolzen wird.

Durch eine derartige geometrische Ausbildung des ersten Fügepartners ist es möglich, den ersten Fügepartner auf relativ einfache Art und Weise derart konstruktiv zu gestalten, dass lediglich der herausragende Bereich in Wirkverbindung mit der Laserstrahlung gelangt und somit aufgeschmolzen wird, während die anderen Bereiche des ersten Fügepartners lediglich in Folge der Wärmeleitung beim Erwärmen des herausragenden Bereichs relativ gering aufgeheizt werden, sodass geometrische oder sonstige Beeinträchtigungen des restlichen Bereichs des ersten Fügepartners zumindest weitgehend ausgeschlossen werden können.

In einer ersten industriellen Umsetzung des zuletzt genannten Verfahrens wird es vorgeschlagen, dass der Laserstrahl unmittelbar auf den wenigstens einen herausragenden Bereich gerichtet wird. Das kann beispielsweise durch eine entsprechende Optik der Laserstrahleinrichtung oder eine entsprechende Ausrichtung der Laserstrahleinrichtung erreicht werden, wobei vorzugsweise vorgesehen ist, dass die beiden Fügepartner während des Aufschmelzens des ersten Fügepartners voneinander beabstandet angeordnet sind.

Alternativ ist es jedoch auch denkbar, dass der Laserstrahl auf den wenigstens einen herausragenden Bereich von der dem herausragenden Bereich abgewandten Seite des ersten Fügepartners gerichtet wird. Dieses Verfahren hat den besonderen Vorteil, dass die beiden Fügepartner bereits zueinander ausgerichtet bzw. gegeneinander gepresst werden können, während der erste Fügepartner noch erwärmt bzw. aufgeschmolzen wird.

Besonders bevorzugt ist es weiterhin vorgesehen, dass der Laserstrahl bzw. der erste Fügepartner relativ zueinander rotativ bewegt werden. Dadurch wird eine gleichmäßige Erwärmung des aufzuschmelzenden Bereichs sowie ein Gegeneinanderpositionieren der Fügepartner erzielt.

Besonders bevorzugt ist die Verwendung eines erfindungsgemäßen Verfahrens bei elektrischen Verbindungen, insbesondere bei Aluminium-Kupfer-Verbindungen im Kontaktierungsbereich von Lithium-Ionen-Batterien.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Prinzipdarstellung zur Erläuterung des erfindungsgemäßen Verfahrens bei einer ersten Ausführungsform in einer vereinfachten Seitenansicht,
- Fig. 2: die beiden Fügepartner der Fig. 1 nach dem Verbinden in Seitenansicht und
- Fig. 3a bis 3c: verschiedene modifizierte Bauteilgeometrien eines ersten Fügepartners in jeweils vereinfachtem Längsschnitt.

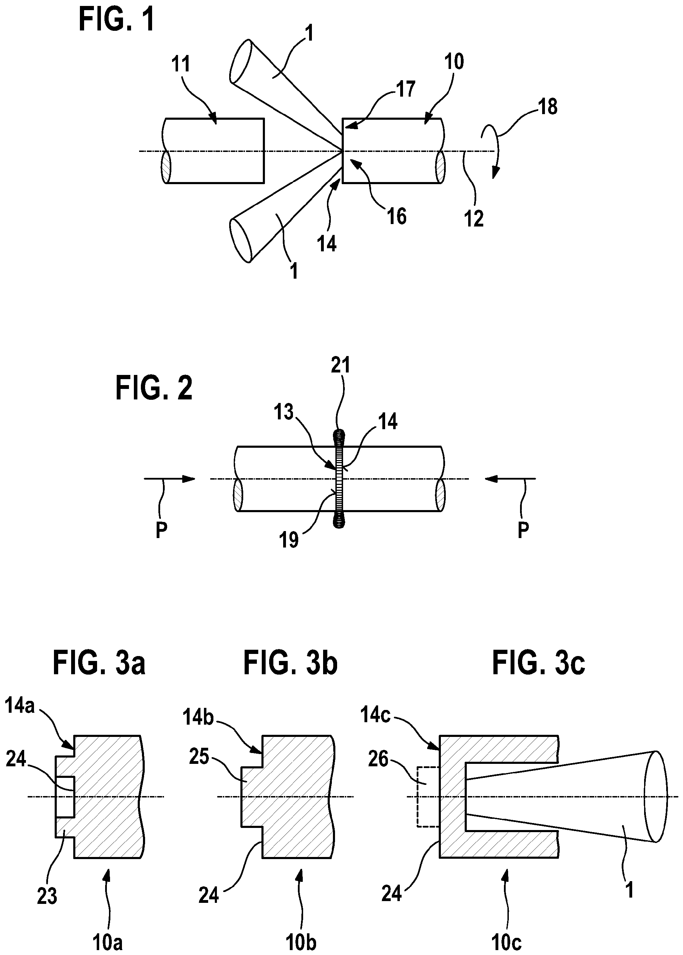

In der Fig. 1 ist ein erstes Ausführungsbeispiel der Erfindung dargestellt. Dabei soll ein erster Fügepartner 10 mit einem zweiten Fügepartner 11 verbunden werden. Die beiden Fügepartner 10, 11 sind im Ausführungsbeispiel beispielhaft jeweils zylindrisch ausgebildet und weisen den gleichen Außendurchmesser auf. Ferner sind sie entlang einer gemeinsamen Längsachse 12 zueinander ausgerichtet und vor dem Verbinden voneinander beabstandet angeordnet.

Es wird darauf hingewiesen, dass die Erfindung grundsätzlich nicht nur auf das Verbinden zylindrischer Bauteile bzw. symmetrisch ausgebildeter Bauteile beschränkt sein soll. Vielmehr können die beiden miteinander zu verbindenden Fügepartner 10, 11 grundsätzlich auch unterschiedliche Geometrien, insbesondere im gemeinsamen Verbindungsbereich 13, aufweisen.

Vorzugsweise wird das erfindungsgemäße Verfahren zum Verbinden zweier Fügepartner 10, 11 eingesetzt, wenn die beiden Fügepartner 10, 11 aus unterschiedlichen Materialien bestehen und unterschiedliche Schmelzpunkte aufweisen. Beispielhaft, jedoch nicht einschränkend, seien hierbei Verbindungen aus Kupfer und Aluminium genannt, bei denen das Aluminium beispielsweise eine typische Schmelztemperatur von 660°C und das Kupfer eine typische Schmelztemperatur von etwa 1080°C aufweist.

Erfindungsgemäß ist es vorgesehen, dass der erste Fügepartner 10 aus demjenigen Material besteht, das gegenüber dem zweiten Fügepartner 11 den niedrigeren Schmelzpunkt aufweist. Dieser erste Fügepartner 10 wird entsprechend der Fig. 1 in einem Verbindungsbereich 13 mittels eines Laserstrahls 1 partiell erwärmt bzw. aufgeschmolzen. Der Laserstrahl 1 wird, gemäß der Erfindung, nach der Erzeugung durch eine nicht dargestellte Laserstrahleinrichtung in dem in der Fig. 1 dargestellten Ausführungsbeispiel mittels einer entsprechenden optischen Einrichtung derart auf die im Ausführungsbeispiel ebene Stirnfläche 14 des ersten Fügepartners 10 gerichtet, dass der Laserstrahl 1 den radial inneren Bereich 16 der Stirnfläche 14 aufschmilzt, während der radial äußere Bereich 17 der Stirnfläche 14 des ersten Fügepartners 10 nicht in direkter Wirkverbindung mit dem Laserstrahl 1 angeordnet ist.

Es liegt auch im Rahmen der Erfindung, mittels des Laserstrahls 1 lediglich den radial äußeren Bereich 17 der Stirnfläche 14 zu erwärmen, während der radial innere Bereich 16 der Stirnfläche 14 nicht direkt erwärmt wird. Weiterhin ist es auch denkbar, dass über die Stirnfläche14 des ersten Fügepartners 10 lediglich Teilbereiche, die über die gesamte Stirnfläche 14 des ersten Fügepartners 10 verteilt sein können, mittels des Laserstrahls 1 erwärmt werden. Weiterhin ist es in Abwandlung des in der Fig. 1 dargestellten Ausführungsbeispiels selbstverständlich auch denkbar, den Laserstrahl 1 beispielsweise senkrecht zur Längsachse 12 der Fügepartner 10, 11 anzuordnen bzw. auszurichten, sodass dieser in Wirkverbindung mit dem radial äußeren Bereich 17 der Stirnfläche 14 des ersten Fügepartners 10 angeordnet ist.

Bevorzugt ist es vorgesehen, dass der erste Fügepartner 10 und der Laserstrahl 1 während des partiellen Aufschmelzens der Stirnfläche 14 relativ zueinander gedreht werden, wie dies durch den Pfeil 18 dargestellt ist.

Nach dem Erwärmen bzw. Aufschmelzen des radial inneren Bereichs 16 der Stirnfläche 14 des ersten Fügepartners 10 werden die beiden Fügepartner 10, 11 entsprechend der Fig. 2 axial mit einer Kraft P gegeneinander gepresst, sodass diese an ihren einander zugewandten Stirnflächen 14, 19 flächig anliegen. Dabei gelangt aufgeschmolzenes Material aus dem Verbindungsbereich 13 des ersten Fügepartners 10 radial nach außen und verbleibt nach dem Erstarren bzw. nach dem Verbinden der beiden Fügepartner 10, 11 als radial umlaufende Wulst 21 an der Bauteilaußenseite der beiden Fügepartner 10, 11 im Verbindungsbereich 13. Der Wulst 21 kann, wie dies aus dem Stand der Technik an sich bereits bekannt ist, anschließend insbesondere durch einen spanenden oder sonstigen geeigneten Fertigungsvorgang entfernt werden, um einen glatten Übergang zwischen den beiden Fügepartnern 10, 11 im Verbindungsbereich 13 zu ermöglichen.

In den Fig. 3a bis 3c sind besonders bevorzugte geometrische Ausgestaltungen des ersten Fügepartners 10a, 10b und 10c dargestellt, bei denen diese im Bereich ihrer Stirnflächen 14a, 14b und 14c jeweils eine strukturierte Oberfläche aufweisen. Bei dem in der Fig. 3a dargestellten ersten Ausführungsbeispiel weist der erste Fügepartner 10a im Bereich der Stirnfläche 14a einen ringförmig umlaufenden Steg 23 auf, der einen von dem Grund 24 der Stirnfläche 14a hervortretenden Bereich ausbildet. Dieser Steg 23 wird mittels des Laserstrahls 1 aufgeschmolzen bzw. erwärmt.

In der Fig. 3b ist ein erster Fügepartner 10b dargestellt, bei der der im mittleren Bereich der Stirnfläche 14b angeordnete, zylindrisch ausgebildete Bereich 25 ebenfalls von dem Grund 24 der Stirnfläche 14b hervorragt. Auch hier ist es vorgesehen, dass der Bereich 25 von dem Laserstrahl 1 erwärmt bzw. aufgeschmolzen wird.

In der Fig. 3c ist ein erster Fügepartner 10c dargestellt, der im Wesentlichen topfförmig ausgebildet ist. Wesentlich dabei ist, dass der Bereich 26, der von dem Grund 24 des ersten Fügepartners 10c an dessen Stirnfläche 14c als zylindrisch ausgebildeter Bereich hervor ragt, von der dem Bereich 26 zugewandten Seite des Fügepartners 10c erwärmt bzw. aufgeschmolzen wird, indem der Laserstrahl 1 von der in Bezug auf den Bereich 26 rückseitigen Seite auf den Fügepartner 10c gerichtet wird (nicht Teil der Erfindung).

Die soweit beschriebenen ersten Fügepartner 10, 10a, 10b und 10c können in vielfältiger Art und Weise abgewandelt bzw. modifiziert werden, ohne vom Erfindungsgedanken abzuweichen. Die ersten Fügepartner 10, 10a, 10b und 10c sind jedoch vorzugsweise derart ausgebildet, dass mittels des Laserstrahls 1 diese im Bereich der den Verbindungbereich 13 ausbildenden Stirnfläche 14, 14a, 14b, 14c mit dem zweiten Fügepartner 11 lediglich partiell aufgeschmolzen werden.

## Patentansprüche

1. Verfahren zum Verbinden zweier Fügepartner (10; 10a; 10b; 10c, 11) mittels Laserstrahlung (1), bei der das Material eines ersten Fügepartners (10; 10a; 10b; 10c) im Verbindungsbereich (13) mit einem zweiten Fügepartner (11) aufgeschmolzen wird und die beiden Fügepartner (10; 10a; 10b; 10c, 11) anschließend unter mechanischem Druck (P) gegeneinander gepresst werden,
**dadurch gekennzeichnet,**
**dass** das Material des ersten Fügepartners (10; 10a; 10b; 10c) im Verbindungsbereich (13) lediglich über einen Teil der Stirnfläche (14; 14a; 14b; 14c) des Verbindungsbereichs (13) des ersten Fügepartners (10; 10a; 10b; 10c) mittels Laserstrahlung (1) aufgeschmolzen wird.

2. Verfahren nach Anspruch 1,
**dadurch gekennzeichnet,**
**dass** die beiden Fügepartner (10; 10a; 10b; 10c, 11) aus unterschiedlichen Materialien mit unterschiedlichem Schmelzpunkt bestehen und dass der Fügepartner (10; 10a; 10b; 10c) aufgeschmolzen wird, dessen Material den niedrigeren Schmelzpunkt aufweist.

3. Verfahren nach Anspruch 1 oder 2,
**dadurch gekennzeichnet,**
**dass** der erste Fügepartner (10a; 10b; 10c) im Verbindungsbereich (13) eine strukturierte Oberfläche aufweist, dass die strukturierte Oberfläche wenigstens einen vom Grund (24) des Fügepartners (10a; 10b; 10c) herausragenden Bereich (23; 25; 26) aufweist, und dass der wenigstens eine Bereich (23; 25; 26) aufgeschmolzen wird.

4. Verfahren nach Anspruch 3,
**dadurch gekennzeichnet,**
**dass** die Laserstrahlung (1) unmittelbar auf den wenigstens einen herausragenden Bereich (23; 25) gerichtet wird.

5. Verfahren nach Anspruch 3,
**dadurch gekennzeichnet,**
**dass** die Laserstrahlung (1) auf den wenigstens einen herausragenden Bereich (26) indirekt von der dem herausragenden Bereich (26) zugewandten Seite des ersten Fügepartners (10c) gerichtet wird.

6. Verfahren nach einem der Ansprüche 3 bis 5,
**dadurch gekennzeichnet,**
**dass** der Laserstrahl bzw. der erste Fügepartner (10a; 10b; 10c) relativ zueinander gedreht werden.

7. Verwendung eines Verfahrens nach einem der Ansprüche 1 bis 6 bei elektrischen Verbindungen, insbesondere bei Aluminium-Kupfer-Verbindungen im Kontaktierungsbereich von Li-Ionen-Batterien.

## Claims

1. Method for connecting two parts to be joined (10; 10a; 10b; 10c, 11) by means of laser radiation (1), in which the material of a first part to be joined (10; 10a; 10b; 10c) is melted in the region of connection (13) to a second part to be joined (11) and the two parts to be joined (10; 10a; 10b; 10c, 11) are then pressed against each other under mechanical pressure (P),
**characterized**
**in that** the material of the first part to be joined (10; 10a; 10b; 10c) is melted by means of laser radiation (1) in the region of connection (13) only over part of the end face (14; 14a; 14b; 14c) of the region of connection (13) of the first part to be joined (10; 10a; 10b; 10c).

2. Method according to Claim 1,
**characterized**
**in that** the two parts to be joined (10; 10a; 10b; 10c, 11) consist of different materials with different melting points and in that the part to be joined (10; 10a; 10b; 10c) of the material that has the lower melting point is melted.

3. Method according to Claim 1 or 2,
**characterized**
**in that** the first part to be joined (10a; 10b; 10c) has a structured surface in the region of connection (13), and in that the structured surface has at least one region (23; 25; 26) protruding from the base (24) of the part to be joined (10a; 10b; 10c), and in that the at least one region (23; 25; 26) is melted.

4. Method according to Claim 3,
**characterized**
**in that** the laser radiation (1) is directed onto the at least one protruding region (23; 25) directly.

5. Method according to Claim 3,
**characterized**
**in that** the laser radiation (1) is directed onto the at least one protruding region (26) indirectly from the side of the first part to be joined (10c) that is facing the protruding region (26).

6. Method according to one of Claims 3 to 5,
**characterized**
**in that** the laser beam and the first part to be joined (10a; 10b; 10c) are turned in relation to one another.

7. Use of a method according to one of Claims 1 to 6 for electrical connections, in particular aluminium-copper connections, in the contacting region of Li-ion batteries.

## Revendications

1. Procédé permettant de relier deux parties à assembler (10 ; 10a ; 10b ; 10c, 11) au moyen d'un rayonnement laser (1), dans lequel le matériau d'une première partie à assembler (10 ; 10a ; 10b ; 10c) est fondu dans une région de liaison (13) avec une seconde partie à assembler (11) et les deux parties à assembler (10 ; 10a ; 10b ; 10c, 11) sont ensuite comprimées l'une contre l'autre sous l'effet d'une pression mécanique (P),
**caractérisé en ce que** le matériau de la première partie à assembler (10 ; 10a ; 10b ; 10c) est uniquement fondu dans la région de liaison (13) sur une partie de la surface avant (14 ; 14a ; 14b ; 14c) de la région de liaison (13) de la première partie à assembler (10 ; 10a ; 10b ; 10c) au moyen d'un rayonnement laser (1).

2. Procédé selon la revendication 1,
**caractérisé en ce que** les deux parties à assembler (10 ; 10a ; 10b ; 10c, 11) sont constituées de matériaux différents ayant des points de fusion différents et **en ce que** la partie à assembler (10 ; 10a ; 10b ; 10c) dont le matériau présente le point de fusion le plus faible est fondue.

3. Procédé selon la revendication 1 ou 2,
**caractérisé en ce que** la première partie à assembler (10a ; 10b ; 10c) présente dans la région de liaison (13) une surface structurée, **en ce que** la surface structurée comporte au moins une région faisant saillie (23 ; 25 ; 26) par rapport à la base (24) de la partie à assembler (10a ; 10b ; 10c) et **en ce que** l'au moins une région (23, 25, 26) est fondue.

4. Procédé selon la revendication 3,
**caractérisé en ce que** le rayonnement laser (1) est dirigé directement vers l'au moins une région faisant saillie (23 ; 25).

5. Procédé selon la revendication 3,
**caractérisé en ce que** le rayonnement laser (1) est dirigé indirectement vers l'au moins une région faisant saillie (26) depuis le côté de la première partie à assembler (10c) qui est tourné vers la région faisant saillie (26).

6. Procédé selon l'une quelconque des revendications 3 à 5,
**caractérisé en ce que** le faisceau laser ou la première partie à assembler (10a ; 10b ; 10c) sont amenés à tourner l'un par rapport à l'autre.

7. Utilisation d'un procédé selon l'une quelconque des revendications 1 à 6, dans des liaisons électriques, notamment dans des liaisons aluminium-cuivre dans la région de mise en contact de batteries au lithium-ion.
